(19) Europäisches Patentamt
European Patent Office
Office européen des brevets

(11) **EP 4 589 910 A1**

(12) **EUROPEAN PATENT APPLICATION**
published in accordance with Art. 153(4) EPC

(43) Date of publication:
**23.07.2025 Bulletin 2025/30**

(21) Application number: **23864514.7**

(22) Date of filing: **09.08.2023**

(51) International Patent Classification (IPC):
***H04L 45/00*** *(2022.01)*

(86) International application number:
**PCT/CN2023/111888**

(87) International publication number:
**WO 2024/055780 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.09.2022 CN 202211109753**

(71) Applicant: **China United Network
Communications
Group Company Limited
Beijing 100033 (CN)**

(72) Inventors:
• **YI, Xinxin
Beijing 100033 (CN)**
• **PANG, Ran
Beijing 100033 (CN)**
• **CAO, Chang
Beijing 100033 (CN)**
• **HE, Tao
Beijing 100033 (CN)**
• **LI, Jianfei
Beijing 100033 (CN)**
• **ZHANG, Yan
Beijing 100033 (CN)**
• **WEN, Xiangjiang
Beijing 100033 (CN)**

(74) Representative: **Murgitroyd & Company
165-169 Scotland Street
Glasgow G5 8PL (GB)**

(54) **COMPUTING POWER NETWORK INFORMATION ANNOUNCEMENT AND ROUTING DECISION-MAKING METHOD AND APPARATUS, AND MEDIUM**

(57)    The present invention relates to the technical field of communications, and provides a computing power network information announcement and routing decision-making method and apparatus, and a medium, for solving the problem in the prior art that there is no effective method to implement information announcement and routing decision-making for nodes in computing power networks. The method comprises: acquiring and storing information of nodes in a computing power network in real time; formulating respective issuing information for each ingress node in the computing power network according to the information of the nodes; and announcing the respective issuing information of each ingress node to each ingress node, so that the ingress node receives the issuing information announced to the ingress node, and according to the received issuing information, carries out routing decision-making for a service accessing the computing power network via the ingress node. The present invention implements centralized information announcement and distributed routing decision-making, and is suitable for the demands of simultaneous scheduling of computing power nodes and network nodes in a computing power network.

FIG. 1

EP 4 589 910 A1

**Description**

This application claims priority to Chinese Patent Application No. CN202211109753.7, filed on September 13, 2022 and entitled "Computing Power Network Information Announcement and Routing Decision-making Method and Apparatus, and Medium", which is incorporated herein by reference in its entirety.

TECHNICAL FIELD

The present disclosure relates to the field of communication technologies, and in particular, to a computing power network information announcement and routing decision-making method, an orchestration management and control system, an entry node, a computing power network, a computer device and a computer-readable storage medium.

BACKGROUND

When a computing power node and a network node in a computing power network are scheduled to provide services for access services, it is necessary to, in combination with service needs, make an optimal routing decision of node resource allocation based on information of each node. There are two implementation methods for reference.

One is distributed information announcement and routing decision-making. That is, certain network node devices are selected to collect other node information and make their own routing decisions. The disadvantage is that all information is diffused and relevant protocols need to be notified synchronously, resulting in bloated data; and an information exchange mechanism between nodes is not yet mature.

The other is to, referring to scheduling of network resources by the existing general network system, collect network node information and make routing decisions by an upper level system, and then publish them to network node devices to execute related routing decisions. The disadvantage lies in complex routing decision calculation, a slow convergence speed, and a lack of a processing mechanism for computing power node information, which cannot be adapted to needs of synchronous scheduling of a computing power node and a network node in a computing power network.

It can be seen that the prior art lacks a method to effectively implement information announcement and routing decisions for each node in the computing power network.

SUMMARY

The technical problem to be solved by the present disclosure is to provide a computing power network information announcement and routing decision-making method, an orchestration management and control system, an entry node, a computing power network, a computer device and a computer-readable storage medium in view of the above deficiencies of the prior art, so as to solve the problem in the prior art of lacking effective methods to implement information announcement and routing decision-making for each node in the computing power network.

In a first aspect, the present disclosure provides a computing power network information announcement and routing decision-making method, which is applied to an orchestration management and control system of a computing power network. The method includes:

obtaining and storing information of each node in the computing power network in real time;
formulating respective issuing information for each entry node in the computing power network based on the information of each node; and
announcing the respective issuing information to each entry node to make each entry node receive the issuing information announced to the entry node itself, and make routing decision for services accessing the computing power network through the services themselves based on the received issuing information.

Optionally, making routing decision for the services accessing the computing power network through the services themselves based on the received issuing information is specifically to make routing decision, by first entry nodes with routing decision-making capabilities in all entry nodes, for the services accessing the computing power network through the services themselves based on the received issuing information.

Optionally, the information of each node specifically includes information of each computing power node.

Information of a computing power node includes location information of the computing power node and resource information of the computing power node.

Optionally, the information of each node specifically further includes information of each network node and information of each entry node.

Information of a network node includes location information of the network node, connection information of the network node and performance information of the network node.

Information of an entry node includes location information of the entry node and access service information.

Optionally, obtaining and storing the information of each node in the computing power network in real time, specifically includes:

receiving self-change information reported in real time by each computing power node, each network node and each entry node in the computing power network after their own information changes, or querying respective information from each computing power node, each network node and each entry node in the computing power network in real time according to a preset frequency; and

storing the received or queried information of each computing power node in a computing power node information database, the received or queried information of each network node in a network node information database, and the received or queried information of each entry node in an entry node information database.

Optionally, formulating respective issuing information for each entry node in the computing power network based on the information of each node, specifically includes:

determining whether each entry node has a routing decision-making capability;

if a first entry node has the routing decision-making capability, aggregating the information of each node for the first entry node, wherein the first entry node is an entry node with the routing decision-making capability; and

further determining whether a change amplitude of each parameter in the aggregated information of each node exceeds a preset threshold; if the change amplitude exceeds the preset threshold, using a current value of a parameter with a change amplitude exceeding the preset threshold as the issuing information for the first entry node.

Optionally, aggregating the information of each node for the first entry node, specifically includes:

dividing all nodes in the computing power network into first type of nodes that meet a preset association condition with the first entry node and second type of nodes that do not meet the preset association condition with the first entry node based on the information of each node; and

for the first entry node, aggregating node information of the first type of nodes according to a first granularity, and aggregating node information of the second type of nodes according to a second granularity information, the second granularity being greater than the first granularity.

Optionally, dividing all the nodes in the computing power network into the first type of nodes that meet the preset association condition with the first entry node and the second type of nodes that do not meet the preset association condition with the first entry node based on the information of each node, specifically includes:

based on location information in the information of each node, dividing some nodes, within a preset proximity range of the first entry node, in the computing power network as the first type of nodes associated with the first entry node;

based on access service information in information of the first entry node, dividing some nodes, having service association with the first entry node, in the computing power network as the first type of nodes associated with the first entry node; and

dividing remaining nodes in the computing power network as the second type of nodes associated with the first entry node.

Optionally, for the first entry node, aggregating the node information of the first type of nodes according to the first granularity, and aggregating the node information of the second type of nodes according to the second granularity, the second granularity being greater than the first granularity, specifically includes:

for the first entry node, aggregating the node information of the first type of nodes according to a first preset time interval and a first preset location area; and

for the first entry node, aggregating the node information of the second type of nodes according to a second preset time interval and a second preset location area;

where the second preset time interval is greater than the first preset time interval, and the second preset location area is greater than the first preset location area.

Optionally, determining whether the change amplitude of each parameter in the aggregated information of each node exceeds the preset threshold; if the change amplitude exceeds the preset threshold, using the current value of the parameter with the change amplitude exceeding the preset threshold as the issuing information for the first entry node, specifically includes:

in response to nodes in the computing power network being computing power nodes, determining whether a change amplitude of a resource information parameter of each computing power node in aggregated information of each computing power node exceeds a first preset threshold; and if the change amplitude exceeds the first preset threshold, using a current value of a resource information parameter of a computing power node with a change amplitude exceeding the first preset threshold as the issuing information of the first entry node; and

in response to nodes in the computing power network being network nodes, determining each network link, from the first entry node to a certain computing power node and connected by connection information of the network node, in aggregated information of each network node, and determining whether a change amplitude of a performance information parameter of a network node of each network link exceeds a second preset threshold; and if the change amplitude exceeds the second preset threshold, using a current value of a performance information parameter of a network node with a change amplitude exceeding the second preset threshold as the issuing information of the first entry node.

Optionally, the change amplitude of the performance information parameter of the network node of each network link is specifically calculated according to a following formula:

$$S^2 = 1/n \sum_{i=1}^{n} (Zi - \mu)^2$$

In the formula, $S^2$ is a change amplitude of a performance information parameter of a certain network node of a certain network link, n is a number of network nodes of the certain network link, Zi is equal to an absolute value of a difference between Xi and Yi (Zi=|Xi-Yi|) and is a deviation between a current value Xi of a performance information parameter of a certain network node of an i-th (i∈(1,n)) network node and a historical value Yi thereof in a previous aggregation, and $\mu$ is an expected value of the performance information parameter of the certain network node.

Optionally, the issuing information for the first entry nodes specifically includes information of computing power nodes for the first entry nodes and information of network nodes for the first entry nodes.

Announcing the respective issuing information to each entry node to make each entry node receive the issuing information announced to the entry node itself, and make the first entry nodes with the routing decision-making capabilities in all the entry nodes make routing decision for the services accessing the computing power network through the services themselves based on the received issuing information, specifically includes: announcing a respective issuing information to each first entry node to make each first entry node receive the issuing information announced to the first entry node itself, and after the services accessing the computing power network through the services themselves are sorted according to a service category and/or user priority, sequentially selecting, based on information of a computing power node and information of a network node in the received issuing information, a computing power node for each service sorted, and selecting a network link, composed of network nodes, reaching the selected computing power node.

Optionally, after determining whether each entry node has the routing decision-making capability, the method further includes: if a second entry node does not have the routing decision-making capability, formulating a routing decision scheme for an access service of the second entry node based on the information of each node, and using the formulated routing decision scheme as the issuing information for the second entry node, wherein the second entry node is an entry node without the routing decision-making capability.

In a second aspect, the present disclosure provides a computing power network information announcement and routing decision-making method, which is applied to an entry node of a computing power network. The method includes:

receiving issuing information announced by an orchestration management and control system of the computing power network, wherein the issuing information is formulated and announced respectively, by the orchestration management and control system, for each entry node in the computing power network based on the information of each node after obtaining and storing information of each node in the computing power network in real time; and making routing decision for services accessing the computing power network through the services themselves based on the received issuing information.

Optionally, the entry node is specifically a first entry node with a routing decision-making capability.

Optionally, making routing decision for the services accessing the computing power network through the services themselves based on the received issuing information, specifically includes:

sorting the services accessing the computing power network through the services themselves according to a service category and/or user priority; and making routing decision sequentially for each sorted service based on the received issuing information.

Optionally, sorting the services accessing the computing power network through the services themselves according to a service category and/or user priority, specifically includes: for a certain service accessing the computing power network through the service itself, prioritizing on a basis of the certain service being a delay-sensitive service, and/or a user of the certain service subscribing to a priority service.

Optionally, issuing information for the first entry node specifically includes information of a computing power node for the first entry node and information of a network node for the first entry node.

Making routing decision sequentially for each sorted service based on the received issuing information, specifically include: sequentially selecting, based on the information of the computing power node and the information of the network node in the received issuing information, a computing power node for each service sorted, and selecting a network link, composed of network nodes, reaching the selected computing power node.

Optionally, the information of the computing power node included in the issuing information is specifically a current value, determined by the orchestration management and control system after aggregating the information of each node for the first entry node, of a resource information parameter of a computing power node with a change amplitude exceeding a first preset threshold.

The information of the network node included in the issuing information is specifically a current value, determined by the orchestration management and control system after aggregating the information of each node for the first entry node, of a performance information parameter of a network node with a change amplitude exceeding a second preset threshold.

In a third aspect, the present disclosure provides an orchestration management and control system of a computing power network, and the orchestration management and control system includes:

a resource collection module configured to obtain and store information of each node in the computing power network in real time;

a resource management module connected to the resource collection module and configured to formulate respective issuing information for each entry node in the computing power network based on the information of each node; and

a resource configuration module connected to the resource management module and configured to announce the respective issuing information to each entry node to make each entry node receive the issuing information announced to the entry node itself, and make routing decision for services accessing the computing power network through the services themselves based on the received issuing information.

In a fourth aspect, the present disclosure provides an entry node of a computing power network, and the entry node includes:

a resource receiving module configured to receive issuing information announced by an orchestration management and control system of the computing power network, wherein the issuing information is formulated and announced respectively, by the orchestration management and control system, for each entry node in the computing power network based on the information of each node after obtaining and storing information of each node in the computing power network in real time; and

a service scheduling module connected to the resource receiving module and configured to make routing decision for services accessing the computing power network through the services themselves based on the received issuing information.

In a fifth aspect, the present disclosure provides a computing power network, and the computing power network includes an orchestration management and control system and various nodes. The nodes include entry nodes, and the entry nodes include a first entry node with a routing decision-making capability. The orchestration management and control system is configured to implement the computing power network information announcement and routing decision-making method as described in the first aspect above, and the first entry node is configured to implement the computing power network information announcement and routing decision-making method as described in the second aspect above.

In a sixth aspect, the present disclosure provides a computer device, and the computer device includes a memory and a processor. The memory has stored a computer program thereon, and when the processor runs the computer program stored in the memory, the processor performs the computing power network information announcement and routing decision-making method as described above.

In a seventh aspect, the present disclosure provides a computer-readable storage medium having stored a computer program thereon. When executed by a processor, the computer program implements the computing power network information announcement and routing decision-making method as described above.

The present disclosure provides a computing power network information announcement and routing decision-making method, an orchestration management and control system, an entry node, a computing power network, a computer device and a computer-readable storage medium. The orchestration management and control system of the computing power network obtains and stores information of each node in the computing power network in real time, formulates respective issuing information for each entry node in the computing power network based on the information of each node, and announces the respective issuing information to each entry node, so that each entry node makes routing decision for services accessing the computing power network through the services themselves. With the centralized information announcement and distributed routing decision-making method, a mature information interaction mechanism may be used to achieve information announcement, and node information may be sent to each entry node in a targeted manner, so as to avoid data bloating. In addition, each entry node making routing decision for its own services may reduce computational complexity of routing decision-making, increase a convergence speed, and can be adapted to the needs of synchronous scheduling of a computing power node and a network node in the computing power network.

DESCRIPTION OF DRAWINGS

FIG. 1 is a flow chart of a computing power network information announcement and routing decision-making method, in accordance with embodiments of the present disclosure;

FIG. 2 is a schematic diagram of a structure of a computing power network, in accordance with embodiments of the present disclosure;

FIG. 3 is a flow chart of another computing power network information announcement and routing decision-making method, in accordance with embodiments of the present disclosure;

FIG. 4 is a schematic diagram of a structure of an orchestration management and control system of a computing power network, in accordance with embodiments of the present disclosure;

FIG. 5 is a schematic diagram of a structure of an entry node of a computing power network, in accordance with embodiments of the present disclosure; and

FIG. 6 is a schematic diagram of a structure of a computer device, in accordance with embodiments of the present disclosure.

## DETAILED DESCRIPTION

In order to enable those skilled in the art to well understand technical solutions of the present disclosure, the embodiments of the present disclosure will be further described in detail below in combination with the accompanying drawings.

It can be understood that the specific embodiments and drawings described here are only used to explain the present disclosure, but not to limit the present disclosure.

It can be understood that in absence of conflict, various embodiments of the present disclosure and various features in the embodiments can be combined with each other.

It can be understood that for convenience of description, only parts related to the present disclosure are shown in the drawings of the present disclosure, and parts irrelevant to the present disclosure are not shown in the drawings.

It can be understood that each unit and module involved in the embodiments of the present disclosure may correspond to only one entity structure or may be composed of a plurality of entity structures, or a plurality of units and modules may be integrated into a single entity structure.

It can be understood that in absence of conflict, functions and steps marked in flow charts and block diagrams of the present disclosure may be achieved in an order different from that marked in the drawings.

It can be understood that the flow charts and the block diagrams of the present disclosure illustrate a system architecture, functions and operations that may be implemented according to systems, devices, equipment and methods in various embodiments of the present disclosure. Each box in the flow charts or the block diagrams may represent a unit, module, program segment or code, which contains executable instructions for achieving a specified function. Furthermore, each block or a combination of blocks in the block diagrams and the flow charts may be implemented by a hardware-based system that performs the specified function, or implemented by a combination of hardware and computer instructions.

It can be understood that units and modules involved in the embodiments of the present disclosure may be implemented in software or hardware. For example, the units and modules may be located in a processor.

Embodiment 1:

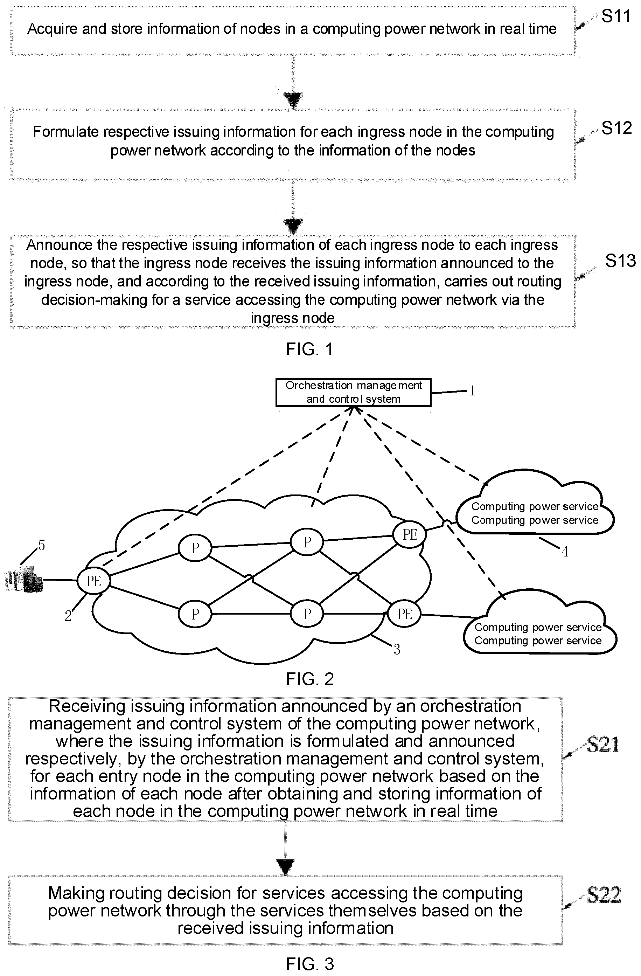

As shown in FIG. 1, Embodiment 1 of the present disclosure provides a computing power network information announcement and routing decision-making method, and the method includes steps S11, S12 and S13.

Specifically, in this embodiment, the method is applied to an orchestration management and control system 1 of a computing power network shown in FIG. 2. The computing power network further includes entry nodes 2, network nodes 3 and computing power nodes 4. The entry node 2 may specifically be an entry gateway for accessing a service device 5. A service of requesting computing power service issued by a certain service device 5 is accessed into the computing power network through a certain entry node 2, and reaches a certain computing power node 4 using a network link formed by connection of some network nodes 3. After the computing power service of the certain computing power node 4 is obtained, a computing power service result is returned to the certain service device 5 through the network link. One of invention ideas of the present disclosure is that the entry node 2 makes its own routing decision. Considering compatibility with a second entry node 2 without a routing decision-making capability in an existing network, the routing decision in step S13 is specifically made by a first entry node 2 with the routing decision-making capability in all the entry nodes 2. If all the entry nodes 2 in the computing power network have the routing decision-making capabilities, there is no special limitation. It will be noted that FIG. 2 is a simplified example of the computing power network in the present disclosure, and there are much more nodes included in an actual computing power network structure and much more service devices 5 accessing the actual computing power network structure than those in FIG. 2.

As shown in FIG. 1, in step S11, information of each node in the computing power network is obtained and stored in real time.

Optionally, the information of each node specifically includes information of each computing power node 4.

The information of the computing power node 4 includes location information of the computing power node 4 and resource information of the computing power node 4.

Optionally, the information of each node specifically further includes information of each network node 3 and information of each entry node 2.

The information of the network node 3 includes location information of the network node 3, connection information of the network node 3 and performance information of the network node 3.

The information of the entry node 2 includes location information of the entry node 2 and access service information.

Optionally, obtaining and storing the information of each node in the computing power network in real time, specifically includes:

receiving self-change information reported in real time by each computing power node 4, each network node 3 and each entry node 2 in the computing power network after their own information changes, or querying respective information from each computing power node 4, each network node 3 and each entry node 2 in the computing power network in real time according to a preset frequency; and
storing the received or queried information of each computing power node 4 in a computing power node information database, the received or queried information of each network node 3 in a network node information database, and the received or queried information of each entry node 2 in an entry node information database.

Specifically, in this embodiment, in an initial stage of establishment of the computing power network, the computing power nodes 4, the network nodes 3 and the entry nodes 2 report all their own information to the orchestration management and control system 1, or the orchestration management and control system 1 collects all information from the computing power nodes 4, the network nodes 3 and the entry nodes 2. After completion of the establishment of the computing power network and during operation of the computing power network, the computing power nodes 4, the network nodes 3 and the entry nodes 2, when their own information changes, respectively report self-change information to the orchestration management and control system 1 to reduce the amount of data transmission, alternatively, the orchestration management and control system 1 collects all the information from the computing power nodes 4, the network nodes 3 and the entry nodes 2 according to the preset frequency, for example, every other 5 seconds / 30 seconds / 1 minute / 5 minutes / 30 minutes, and the specific interval is set according to network requirements. The orchestration management and control system 1 establishes a computing power node information database, a network node information database and an entry node information database in advance, and stores all the collected information in the corresponding databases. The information collected for the computing power node 4 includes location information such as the location of the resource pool where the computing power node 4 is located, and resource information such as service type, resource type, total amount/surplus/utilization rate of the computing resource, total amount/surplus/utilization rate of the storage resource, the number of service connections, total amount/surplus/utilization rate of external connection bandwidth and the number of external connection links. The information collected for the network node 3 includes location information such as IP (Internet Protocol) address of the network node 3, connection information such as a network link composed of network nodes 3 and nodes at both ends of the network link, and performance information such as link delay, link packet loss rate and total amount/surplus/utilization rate of link bandwidth. The information collected for the entry node 2 includes location information such as IP address of the entry node 2, and access service information further included during operation of the computing power network such as name of service accessed by the entry node 2, service type, computing power node and network link used by the service. When the entry node 2 is an access gateway, the entry node 2 is essentially a network node 3, and may also be used as a network node 3 to collect relevant information and store the information in the network node information database. It will be noted that the present disclosure may also take into account the computing power network in which the existing network node 3 has deployed a distributed route announcement protocol. In this case, since the network node 3 already has capabilities of announcing and diffusing of network information, the network node 3 uses the existing route announcement protocol for announcement and diffusion. The orchestration management and control system 1 does not collect the information of each network node 3, and each network node 3 does not report its own information to the orchestration management and control system 1. That is, the information of each node does not include the information of each network node 3. The orchestration management and control system 1 processes the information of each computing power node 4 according to the method of the present disclosure, and sends the processed information of the computing power node 4 to each entry node 2.

As shown in FIG. 1, in step S12, respective issuing information is formulated for each entry node 2 in the computing power network based on the information of each node.

Optionally, formulating respective issuing information for each entry node 2 in the computing power network based on the information of each node, specifically includes:

determining whether each entry node (2) has a routing decision-making capability;

if a first entry node 2 has the routing decision-making capability, aggregating the information of each node for the first entry node 2, wherein the first entry node 2 is an entry node 2 with the routing decision-making capability; and

further determining whether a change amplitude of each parameter in the aggregated information of each node exceeds a preset threshold; if the change amplitude exceeds the preset threshold, using a current value of a parameter with a change amplitude exceeding the preset threshold as the issuing information for the first entry node 2.

Optionally, aggregating the information of each node for the first entry node 2, specifically includes:

dividing all nodes in the computing power network into first type of nodes that meet a preset association condition with the first entry node 2 and second type of nodes that do not meet the preset association condition with the first entry node 2 based on the information of each node; and

for the first entry node 2, aggregating node information of the first type of nodes according to a first granularity, and aggregating node information of the second type of nodes according to a second granularity, the second granularity being greater than the first granularity.

Optionally, dividing all the nodes in the computing power network into the first type of nodes that meet the preset association condition with the first entry node 2 and the second type of nodes that do not meet the preset association condition with the first entry node 2 based on the information of each node, specifically includes:

based on location information in the information of each node, dividing some nodes, within a preset proximity range of the first entry node 2, in the computing power network as the first type of nodes associated with the first entry node 2;

based on access service information in information of the first entry node 2, dividing some nodes, having service association with the first entry node 2, in the computing power network as the first type of nodes associated with the first entry node 2; and

dividing remaining nodes in the computing power network as the second type of nodes associated with the first entry node 2.

Optionally, for the first entry node 2, aggregating the node information of the first type of nodes according to the first granularity, and aggregating the node information of the second type of nodes according to the second granularity, the second granularity being greater than the first granularity, specifically includes:

for the first entry node 2, aggregating the node information of the first type of nodes according to a first preset time interval and a first preset location area; and

for the first entry node 2, aggregating the node information of the second type of nodes according to a second preset time interval and a second preset location area.

Here, the second preset time interval is greater than the first preset time interval, and the second preset location area is greater than the first preset location area.

Optionally, determining whether the change amplitude of each parameter in the aggregated information of each node exceeds the preset threshold; if the change amplitude exceeds the preset threshold, using the current value of the parameter with the change amplitude exceeding the preset threshold as the issuing information for the first entry node 2, specifically includes:

in response to nodes in the computing power network being computing power nodes 4, determining whether a change amplitude of a resource information parameter of each computing power node 4 in aggregated information of each computing power node 4 exceeds a first preset threshold; and if the change amplitude exceeds the first preset threshold, using a current value of a resource information parameter of a computing power node 4 with a change amplitude exceeding the first preset threshold as the issuing information of the first entry node 2; and

in response to nodes in the computing power network being network nodes, determining each network link, from the first entry node 2 to a certain computing power node 4 and connected by connection information of the network node 3, in aggregated information of each network node 3, and determining whether a change amplitude of a performance information parameter of a network node 3 of each network link exceeds a second preset threshold; and if the change amplitude exceeds the second preset threshold, using a current value of a performance information parameter of a network node 3 with a change amplitude exceeding the second preset threshold as the issuing information of the first entry node 2.

Optionally, the change amplitude of the performance information parameter of the network node of each network link is specifically calculated according to a following formula:

$$S^2 = 1/n \sum_{i=1}^{n} (Zi - \mu)^2$$

In the formula, $S^2$ is a change amplitude of a performance information parameter of a certain network node 3 of a certain network link, n is a number of network nodes 3 of the certain network link, $Z_i$ is equal to an absolute value of a difference between $X_i$ and $Y_i$ ($Z_i = |X_i - Y_i|$) and is a deviation between a current value $X_i$ of a performance information parameter of a certain network node 3 of an i-th ($i \in (1,n)$) network node 3 and a historical value $Y_i$ thereof in a previous aggregation, and $\mu$ is an expected value of the performance information parameter of the certain network node 3.

Specifically, in this embodiment, after obtaining and storing the information of each node, the orchestration management and control system 1 reads the stored data from each database and performs aggregation processing. In an initial stage of establishment of the computing power network, the aggregation method may perform aggregation in a time dimension and a location dimension. For example, the orchestration management and control system 1 collects the information every other 5 seconds, and values in the information collected during the period are averaged every other 1 minute. The total resource information of several computing power nodes 4 within a certain preset location area is aggregated, and the total performance information of several network nodes 3 directly connected to a certain computing power node 4 is aggregated. The amount of data transmitted from the orchestration management and control system 1 to the entry node 2 may be reduced through aggregation, and the issuing information with a respective granularity may also be formulated for each entry node 2. In the Internet field, a large granularity means macro and generalization, a small granularity means more micro and attention to details, and in the present disclosure, the granularity can be understood as the amount or density of node information data in the issuing information. For example, for a certain entry node 2, several computing power nodes 4 located in a certain set neighboring area (specific value is determined according to the actual network) of the entry node 2 and network nodes 3 of the network link from a certain entry node 2 to the above several computing power nodes 4 are determined as nodes (first type of nodes) with a high association with the certain entry node 2 (how to determine the degree of association is specifically determined according to the actual network), and for nodes with high association, the information thereof is aggregated at a small time interval, and resource information and performance information thereof are aggregated with a small number of nodes. In this case, the aggregated information has a small granularity (the first granularity), which may represent more detailed node information, and is used as the issuing information with the first granularity of a certain entry node 2. The remaining nodes (second type of nodes) may be considered to have a low association with the certain entry node 2, and the relevant information of the node may be aggregated at a large time interval and with a large number of nodes. In this case, the aggregated information has a large granularity (the second granularity), which may represent more general node information.

In addition, during operation of the computing power network, it is also possible to determine the nodes with a high association with the certain entry node 2 based on the association with the service accessed by the certain entry node 2, for example, a computing power node 4 and a network node 3 of which services are being used by the service, and more detailed node information should be announced to the corresponding entry node 2, that is, information with a small granularity may be announced. For the second type of nodes, information with a large granularity may be announced. In this way, the amount of transmitted data may be reduced and effectiveness of the issuing information may be ensured.

Specifically, in this embodiment, after obtaining and storing the information of each node, the orchestration management and control system 1 reads the stored data from each database, and determines whether to perform data issuing according to the change amplitude of the stored data, which may specifically include: calculating a change amplitude for a single computing power node 4 and calculating a change amplitude for a network link connected to a plurality of network nodes 3. For calculating the change amplitude for the single computing power node 4, for example, a current value of a certain parameter of resource information of a certain computing power node 4 is C2, the last stored historical value is C1, and a deviation between the two is calculated according to the following formula: $$b = \frac{|C1 - C2|}{C1}$$ . If b is greater than or equal to r ($b >= r$), it is considered that the value of C2 needs to be issued, where r is a change ratio coefficient of a certain parameter value of a certain computing power node 4 and may be set as a constant based on the characteristics of each parameter value according to characteristics of each parameter value. For example, for a parameter of the computing resource utilization rate, r is set to 10% (a possible first preset threshold, where the specific value is determined according to the actual network), and it is defined that the computing resource utilization rate changing by more than 10% is considered as a great change and the data issuing is required. If b is less than r ($b < r$), it means that the computing resource utilization rate of the computing power node 4 does not change by more than 10%, and the data issuing is not required. For calculating the change amplitude for the network link connected to the plurality of network nodes, for example, a certain network link includes n network nodes 4, a current value of a certain parameter of performance information of the n network nodes 4 is a data set (Y1, Y2, Y3,,, Yn), the last stored historical value is a data set (X1, X2, X3,,, Xn), the expected value $\mu$ is set as a constant based on the characteristics of each parameter value according to characteristics of each parameter value, and a deviation between the two is calculated according to the following formula:

$$S^2 = 1/n \sum_{i=1}^{n}(Zi - \mu)^2$$

, where Zi is equal to an absolute value of a difference between Xi and Yi (|Zi=|Xi-Yi|). If $S^2$ is greater than or equal to k ($S^2$>=k), it is considered that the value of (Y1, Y2, Y3,,, Yn) needs to be issued, where k is a deviation variance coefficient of a newly collected value of a certain parameter of a network node 3 and an original value thereof and may be set as a constant according to different parameter types. For example, for link delay, k is set to 0.05 ms (a possible second preset threshold, where the specific value is determined according to the actual network). When an overall deviation of the newly collected delay value exceeds 0.05 ms, it is determined that the delay data of the network link has a great change and the data issuing is required. Otherwise, the data issuing is not required. Using the change amplitude of data to control whether to perform data issuing may also be combined with the aforementioned information aggregation process. The above calculation is performed base on the parameter values in the aggregated information, and the information is announced according to a variable frequency and granularity, so as to obtain optimal processing efficiency, and reduce the amount of transmitted data well and ensure the effectiveness of the issuing information. For a case where the information of each node does not include the information of each network node 3, it is only necessary to process the information of each computing power node 4 according to the above method.

As shown in FIG. 1, in step S13, the respective issuing information is announced to each entry node 2 to make each entry node 2 receive the issuing information announced to the entry node 2 itself, and make routing decision for services accessing the computing power network through the services themselves based on the received issuing information. Optionally, making routing decision for the services accessing the computing power network through the services themselves based on the received issuing information is specifically to make routing decision, by first entry nodes 2 with routing decision-making capabilities in all entry nodes 2, for the services accessing the computing power network through the services themselves based on the received issuing information.

Optionally, announcing the respective issuing information to each entry node 2 specifically refers to announce the respective issuing information to each entry node 2 through a southbound-northbound interface.

Optionally, the issuing information for the first entry nodes 2 specifically includes information of computing power nodes 4 for the first entry nodes 2 and information of network nodes 3 for the first entry nodes 2.

Optionally, announcing the respective issuing information to each entry node 2 to make each entry node 2 receive the issuing information announced to the entry node 2 itself, and make the first entry nodes 2 with the routing decision-making capabilities in all the entry nodes 2 make routing decision for the services accessing the computing power network through the services themselves based on the received issuing information, specifically include:
announcing a respective issuing information to each first entry node 2 to make each first entry node 2 receive the issuing information announced to the first entry node 2 itself, and after the services accessing the computing power network through the services themselves are sorted according to a service category and/or user priority, sequentially selecting, based on information of a computing power node 4 and information of a network node 3 in the received issuing information, a computing power node 4 for each service sorted, and selecting a network link, composed of network nodes 3, reaching the selected computing power node 4.

Specifically, in this embodiment, the issuing information is announced by the orchestration management and control system 1 to each entry node 2. For example, announcing the issuing information may be achieved through the southbound-northbound interface without the need of, between nodes, using the border gateway protocol (BGP), interior gateway protocol (IGP), open short path first (OSPF) and other complex protocols, so as to reduce the requirements for node devices. The southbound/northbound interface includes a southbound interface and a northbound interface. The northbound interface is an interface provided to other manufacturers or operators for access and management, that is, an interface provided for a high-level component. The southbound interface is an interface for managing network management or devices of other manufacturers, that is, an interface provided for a low-level component. The routing decision-making refers to, when a certain service needs to use the computing power resource, determine, for the service, one or some computing power nodes 4 that meet the requirements of the computing power resource, and select a path from an entry node 2 accessed by the service through several network nodes 3 to a computing power node 4 that needs to be used. There is already an implicit condition here, the entry node 2 that can make the routing decision inevitably has a routing decision-making capability, and is referred to as "the first entry node 2 (there may not be a second entry node 2 in the computing power network described in the present disclosure)" in this application document. Therefore, the step S13 may also be expressed as "announcing the respective issuing information to each entry node 2 to make each entry node 2 receive the issuing information announced to the entry node 2 itself, and make the first entry nodes 2 with the routing decision-making capabilities in all the entry nodes 2 make routing decision for the services accessing the computing power network through the services themselves based on the received issuing information". In addition, the "routing decision-making" in the present disclosure further includes a relatively special situation, that is, the entry node 2 can directly reach the computing power node 4, which is also an optimal routing scheme. This situation is also included in the protection scope requested by the present disclosure. The entry node 2 in the computing power network as shown in FIG. 2, especially the first entry node 2 with a routing decision-making capability, makes routing decision for the services accessing the computing power network through the services themselves by receiving the issuing information announced by the orchestration management and control system 1. When accessing a plurality of services, the first entry node 2 may sort the services in terms of routing decision-making according to the service category and the user priority. For example, in a case where the service is a delay-sensitive service, the service needs to be prioritize routing decisions; alternatively, in a case where users who use the service subscribe to priority service, the service needs to be prioritize routing decisions, that is, real-time routing decision is made. Since the orchestration management and control system 1 may announce corresponding issuing information only when a change amplitude of information of each node exceeds a preset threshold, the entry node 2 should further have certain recording capabilities to record information of the node required for making the routing decision by itself, so that the information used for routing decisions indicates the current status of each node. The routing decision is usually to arrange, for a service, a computing power node 4 that meets a computing power need for the service and has the optimal resource and the shortest distance, and simultaneously to select a network link with the optimal network performance to the computing power node 4 and composed of network nodes 3. Each entry node 2 making a routing decision of its own service may improve the calculation efficiency and the convergence speed of routing decision-making, and may achieve fast traffic access and path optimization and improve the service using experience.

Optionally, after determining whether each entry node 2 has a routing decision-making capability, the method further includes:

if a second entry node 2 does not have the routing decision-making capability, formulating a routing decision scheme for an access service of the second entry node 2 based on the information of each node, and using the formulated routing decision scheme as the issuing information for the second entry node 2, where the second entry node 2 is an entry node 2 without the routing decision-making capability.

Specifically, in this embodiment, considering that there may be entry nodes 2 that do not have routing decision-making capabilities in the existing computing power network, for these entry nodes 2, the orchestration management and control system 1 may add a step of determining whether each entry node 2 has a routing decision-making capability. If there is an entry node 2 (the second entry node 2) that does not have the routing decision-making capability, the orchestration management and control system 1 will formulate a separate routing decision-making scheme for the entry node 2, and then directly issue the route decision to the entry node 2. As a result, after the second entry node 2 receives the issuing information announced to the second entry node 2 itself, the second entry node 2 may perform, for the service accessing the computing power network through the service itself, the received routing decision scheme, without the need to issue the corresponding node information (that is, for the first entry node 2, the corresponding node information is directly issued in steps S12 and S13, and then the first entry node 2 makes its own routing decision; and for the second entry node 2, the orchestration management and control system 1 makes the routing decision, and then issues the routing decision scheme to the second entry node 2 for performing; where the issuing information for the two entry nodes is different). For the entry node 2 (the first entry node 2) with the routing decision-making capability, the steps S12 and S13 are continued to be performed as described in Embodiment 1.

In Embodiment 1, centralized information announcement is implemented from a perspective of the orchestration management and control system 1 of the computing power network. A mature information interaction mechanism is used and node information may be sent to each entry node in a targeted manner, so as to avoid data bloating. Furthermore, the distributed routing decision-making being achieved by each entry node may realize scheduling of computing power nodes and the network nodes in the computing power network.

Embodiment 2:

As shown in FIG. 3, Embodiment 2 of the present disclosure provides a computing power network information announcement and routing decision-making method, which is applied to an entry node of a computing power network. The method includes following steps.

In S21, issuing information announced by an orchestration management and control system of the computing power network is received, where the issuing information is formulated and announced respectively, by the orchestration management and control system, for each entry node in the computing power network based on the information of each node after obtaining and storing information of each node in the computing power network in real time.

In S22, routing decision is made for services accessing the computing power network through the services themselves based on the received issuing information.

Optionally, the entry node is specifically a first entry node with a routing decision-making capability.

Optionally, receiving the issuing information announced by the orchestration management and control system of the computing power network specifically refers to receive the issuing information announced by the orchestration management and control system of the computing power network through a southbound-northbound interface.

Optionally, making routing decision for the services accessing the computing power network through the services themselves based on the received issuing information, specifically includes:

> sorting the services accessing the computing power network through the services themselves according to a service category and/or user priority; and
> making routing decision sequentially for each sorted service based on the received issuing information.

Optionally, sorting the services accessing the computing power network through the services themselves according to a service category and/or user priority, specifically includes:
for a certain service accessing the computing power network through the service itself, prioritizing on a basis of the certain service being a delay-sensitive service, and/or a user of the certain service subscribing to a priority service.

Optionally, issuing information for the first entry node specifically includes information of a computing power node for the first entry node and information of a network node for the first entry node.

Optionally, making routing decision sequentially for each sorted service based on the received issuing information, specifically include:
sequentially selecting, based on the information of the computing power node and the information of the network node in the received issuing information, a computing power node for each service sorted, and selecting a network link, composed of network nodes, reaching the selected computing power node.

Optionally, the information of the computing power node included in the issuing information is specifically a current value, determined by the orchestration management and control system after aggregating the information of each node for the first entry node, of a resource information parameter of a computing power node with a change amplitude exceeding a first preset threshold.

The information of the network node included in the issuing information is specifically a current value, determined by the orchestration management and control system after aggregating the information of each node for the first entry node, of a performance information parameter of a network node with a change amplitude exceeding a second preset threshold.

Specifically, the method described in this embodiment corresponds to the method described in Embodiment 1, and is specifically applied to an entry node 2 of a computing power network shown in FIG. 2. The entry node 2 described in this embodiment mainly refers to a first entry node 2 with a routing decision-making capability. It is easy to know that an execution subject in step S22 inevitably has a routing decision-making capability and may only be a first entry node 2 (there may not be a second entry node 2 in the computing power network). Therefore, the step S23 may also be expressed as "making the routing decision for services accessing the computing power network through the services themselves based on the received issuing information, the entry node 2 being the first entry node 2 with the routing decision-making capability". The first entry node 2 makes routing decision for the services accessing the computing power network through the services themselves by receiving the issuing information announced by the orchestration management and control system 1. When accessing a plurality of services, the first entry node 2 may sort the services in terms of routing decision-making according to the service category and the user priority. For example, in a case where the service is a delay-sensitive service, the service needs to be prioritize routing decisions; alternatively, in a case where users who use the service subscribe to priority service, the service needs to be prioritize routing decisions, that is, real-time routing decision is made. Since the orchestration management and control system 1 may announce corresponding issuing information only when a change amplitude of information of each node exceeds a preset threshold, the entry node 2 should further have certain recording capabilities to record information of the node required for making the routing decision by itself, so that the information used for routing decisions indicates the current status of each node. The routing decision is usually to arrange, for a service, a computing power node 4 that meets a computing power need for the service and has the optimal resource and the shortest distance, and simultaneously to select a network link with the optimal network performance to the computing power node 4 and composed of network nodes 3. The entry node of the computing power network in Embodiment 2 interacts with the orchestration management and control system in Embodiment 1 to complete the computing power network information announcement and routing decision-making, and the specific process may be understood in conjunction with Embodiment 1. In Embodiment 2, from a perspective of the entry node of the computing power network, reception of information announcement from the orchestration management and control system is implemented to make distributed routing decisions, so as to reduce computational complexity of the routing decision-making and increase a convergence speed, thereby realizing scheduling of computing power nodes and the network nodes in the computing power network.

Embodiment 3:

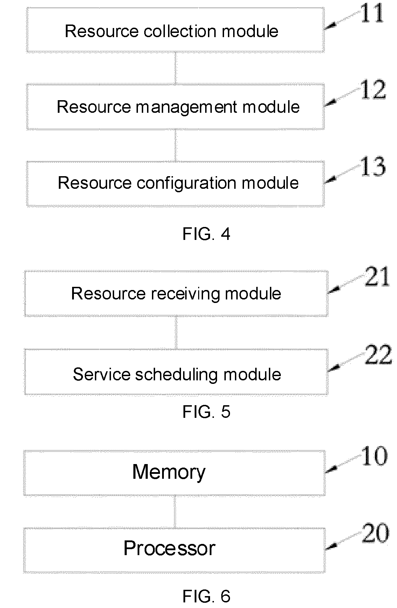

As shown in FIG. 4, Embodiment 3 of the present disclosure provides an orchestration management and control system of a computing power network, including:

> a resource collection module 11 configured to obtain and store information of each node in the computing power network in real time;

a resource management module 12 connected to the resource collection module 11 and configured to formulate respective issuing information for each entry node in the computing power network based on the information of each node; and

a resource configuration module 13 connected to the resource management module 12 and configured to announce the respective issuing information to each entry node to make each entry node receive the issuing information announced to the entry node itself, and make routing decision for services accessing the computing power network through the services themselves based on the received issuing information.

Optionally, in this embodiment, first entry nodes with routing decision-making capabilities in all entry nodes make routing decision for the services accessing the computing power network through the services themselves based on the received issuing information.

Optionally, the information of each node specifically includes information of each computing power node.

Information of a computing power node includes location information of the computing power node and resource information of the computing power node.

Optionally, the information of each node specifically further includes information of each network node and information of each entry node.

Information of a network node includes location information of the network node, connection information of the network node and performance information of the network node.

Information of an entry node includes location information of the entry node and access service information.

Optionally, the resource collection module 11 specifically includes:

a real-time acquisition unit configured to receive self-change information reported in real time by each computing power node, each network node and each entry node in the computing power network after their own information changes, or query respective information from each computing power node, each network node and each entry node in the computing power network in real time according to a preset frequency; and

a storage unit connected to the real-time acquisition unit and configured to store the received or queried information of each computing power node in a computing power node information database, the received or queried information of each network node in a network node information database, and the received or queried information of each entry node in an entry node information database.

Optionally, the resource management module 12 specifically includes:

a determination unit configured to determine whether each entry node has a routing decision-making capability;

an aggregation unit connected to the determination unit and configured to, if a first entry node has the routing decision-making capability, aggregate the information of each node for the first entry node, where the first entry node is an entry node with the routing decision-making capability; and

a formulation unit connected to the aggregation unit and configured to further determine whether a change amplitude of each parameter in the aggregated information of each node exceeds a preset threshold; and if the change amplitude exceeds the preset threshold, use a current value of a parameter with a change amplitude exceeding the preset threshold as the issuing information for the first entry node.

Optionally, the aggregation unit specifically includes:

a division sub-unit configured to divide all nodes in the computing power network into first type of nodes that meet a preset association condition with the first entry node and second type of nodes that do not meet the preset association condition with the first entry node based on the information of each node; and

an aggregation sub-unit connected to the division sub-unit and configured to, for the first entry node, aggregate node information of the first type of nodes according to a first granularity, and aggregate node information of the second type of nodes according to a second granularity, the second granularity being greater than the first granularity.

Optionally, the division sub-unit is specifically configured to:

based on location information in the information of each node, divide some nodes, within a preset proximity range of the first entry node, in the computing power network as the first type of nodes associated with the first entry node;

based on access service information in information of the first entry node, divide some nodes, having service association with the first entry node, in the computing power network as the first type of nodes associated with the first entry node; and

divide remaining nodes in the computing power network as the second type of nodes associated with the first entry node.

Optionally, the aggregation sub-unit is specifically configured to:

for the first entry node, aggregate the node information of the first type of nodes according to a first preset time interval and a first preset location area; and

for the first entry node, aggregate the node information of the second type of nodes according to a second preset time interval and a second preset location area;

where the second preset time interval is greater than the first preset time interval, and the second preset location area is greater than the first preset location area.

Optionally, the formulation unit specifically includes:

a first formulation sub-unit configured to, in response to nodes in the computing power network being computing power nodes, determine whether a change amplitude of a resource information parameter of each computing power node in aggregated information of each computing power node exceeds a first preset threshold; and if the change amplitude exceeds the first preset threshold, use a current value of a resource information parameter of a computing power node with a change amplitude exceeding the first preset threshold as the issuing information of the first entry node; and

a second formulation sub-unit configured to, in response to nodes in the computing power network being network nodes, determine each network link, from the first entry node to a certain computing power node and connected by connection information of the network node, in aggregated information of each network node, and determine whether a change amplitude of a performance information parameter of a network node of each network link exceeds a second preset threshold; and if the change amplitude exceeds the second preset threshold, use a current value of a performance information parameter of a network node with a change amplitude exceeding the second preset threshold as the issuing information of the first entry node.

Optionally, the change amplitude of the performance information parameter of the network node of each network link in the second formulation sub-unit is specifically calculated according to a following formula:

$$S^2 = 1/n \sum_{i=1}^{n} (Zi - \mu)^2$$

In the formula, $S^2$ is a change amplitude of a performance information parameter of a certain network node of a certain network link, n is a number of network nodes of the certain network link, Zi is equal to an absolute value of a difference between Xi and Yi (Zi=|Xi-Yi|) and is a deviation between a current value Xi of a performance information parameter of a certain network node of an i-th (i∈(1,n)) network node and a historical value Yi thereof in a previous aggregation, and $\mu$ is an expected value of the performance information parameter of the certain network node.

Optionally, announcing the respective issuing information to each entry node specifically refers to announce the respective issuing information to each entry node through a southbound-northbound interface.

Optionally, the issuing information for the first entry nodes specifically includes information of computing power nodes for the first entry nodes and information of network nodes for the first entry nodes.

Optionally, the resource configuration module 13 is specifically configured to:

announce a respective issuing information to each first entry node to make each first entry node receive the issuing information announced to the first entry node itself, and after the services accessing the computing power network through the services themselves are sorted according to a service category and/or user priority, sequentially select, based on information of a computing power node and information of a network node in the received issuing information, a computing power node for each service sorted, and select a network link, composed of network nodes, reaching the selected computing power node.

Optionally, the resource management formulation module 12 is specifically further configured to:

if a second entry node does not have the routing decision-making capability, formulate a routing decision scheme for an access service of the second entry node based on the information of each node, and use the formulated routing decision scheme as the issuing information for the second entry node, where the second entry node is an entry node without the routing decision-making capability.

The resource configuration module 13 is specifically further configured to:

announce respective issuing information to each second entry node to make the second entry node perform, for the service accessing the computing power network through the service itself, the received routing decision scheme after receiving the issuing information announced to the second entry node itself.

The orchestration management and control system of the computing power network is provided in Embodiment 3 and implements centralized information announcement. A mature information interaction mechanism is used and node information may be sent to each entry node in a targeted manner, so as to avoid data bloating. Furthermore, the distributed routing decision-making being achieved by each entry node may realize scheduling of computing power nodes and the network nodes in the computing power network.

Embodiment 4:

As shown in FIG. 5, Embodiment 4 of the present disclosure provides an entry node of a computing power network, including:

a resource receiving module 21 configured to receive issuing information announced by an orchestration management and control system of the computing power network, wherein the issuing information is formulated and announced respectively, by the orchestration management and control system, for each entry node in the computing power network based on the information of each node after obtaining and storing information of each node in the computing power network in real time; and

a service scheduling module 22 connected to the resource receiving module 21 and configured to make routing decision for services accessing the computing power network through the services themselves based on the received issuing information.

Optionally, in this embodiment, the entry node is a first entry node with a routing decision-making capability.

Optionally, the resource receiving module 21 specifically receives the issuing information announced by the orchestration management and control system of the computing power network through a southbound-northbound interface.

Optionally, the service scheduling module 22 specifically includes:

a sorting unit configured to sort the services accessing the computing power network through the services themselves according to a service category and user priority; and

a decision-making unit connected to the sorting unit and configured to make routing decision sequentially for each sorted service based on the received issuing information.

Optionally, the sorting unit is specifically configured to:

for a certain service accessing the computing power network through the service itself, prioritize on a basis of the certain service being a delay-sensitive service, and/or a user of the certain service subscribing to a priority service.

Optionally, issuing information for the first entry node specifically includes information of a computing power node for the first entry node and information of a network node for the first entry node.

Optionally, the decision-making unit is specifically configured to:

sequentially select, based on the information of the computing power node and the information of the network node in the received issuing information, a computing power node for each service sorted, and select a network link, composed of network nodes, reaching the selected computing power node.

Optionally, the information of the computing power node included in the issuing information is specifically a current value, determined by the orchestration management and control system after aggregating the information of each node for the first entry node, of a resource information parameter of a computing power node with a change amplitude exceeding a first preset threshold.

The information of the network node included in the issuing information is specifically a current value, determined by the orchestration management and control system after aggregating the information of each node for the first entry node, of a performance information parameter of a network node with a change amplitude exceeding a second preset threshold.

It can be understood that the second entry node without the routing decision-making capability also includes a resource receiving module 21 and a service scheduling module 22. Although the resource receiving module 21 receives different issuing information from the first entry node, since the issuing information is determined by the orchestration management and control system, there is generally no difference in settings. The service scheduling module 22 cannot make the routing decision, but may still perform scheduling of the computing power resources and the network resources for its own services based on the routing decision scheme in the issuing information from the orchestration management and control system, and plays its role in the computing network.

The entry node of the computing power network is provided in Embodiment 4 and implements reception of information announcement from the orchestration management and control system to make distributed routing decisions, so as to reduce computational complexity of the routing decision-making and increase a convergence speed, thereby realizing scheduling of computing power nodes and the network nodes in the computing power network.

Embodiment 5:

As shown in FIG. 2, Embodiment 5 of the present disclosure provides a computing power network, including an orchestration management and control system 1 and various nodes. The nodes include entry nodes 2, and the entry nodes 2 include a first entry node 2 with a routing decision-making capability. The orchestration management and control system 1 is configured to implement the computing power network information announcement and routing decision-making method as described in Embodiment 1, and the first entry node 2 is configured to implement the computing power network information announcement and routing decision-making method as described in Embodiment 2.

The computing power network is provided in Embodiment 5 and may implement centralized information announcement in the network. A mature information interaction mechanism is used and node information may be sent in a targeted manner, so as to avoid data bloating. Furthermore, the computing power network may implement the distributed routing decision-making in the network, so as to reduce computational complexity of the routing decision-making and increase a convergence speed, thereby realizing scheduling of computing power nodes and the network nodes in the computing power network.

Embodiment 6:

As shown in FIG. 6, Embodiment 6 of the present disclosure provides a computer device, including a memory 10 and a processor 20. The memory 10 has stored a computer program thereon. When the processor 20 runs the computer program stored in the memory 10, the processor 20 performs the computing power network information announcement and routing decision-making method as described in Embodiment 1 or 2.

The memory 10 is connected to the processor 20. The memory 10 may be a flash memory, a read-only memory or other memories. The processor 20 may be a central processing unit or a single-chip microcomputer.

The computer device is provided in Embodiment 6 and is used to implement centralized information announcement. A mature information interaction mechanism is used and node information may be sent in a targeted manner, so as to avoid data bloating. Furthermore, the computer device may implement the distributed routing decision-making, so as to reduce computational complexity of the routing decision-making and increase a convergence speed, thereby realizing scheduling of computing power nodes and the network nodes in the computing power network.

Embodiment 7:

Embodiment 7 of the present disclosure provides a computer-readable storage medium on which a computer program is stored. When the computer program is executed by a processor, the computer program implements the computing power network information announcement and routing decision-making method as described in Embodiment 1 or 2.

The computer-readable storage medium includes volatile (transitory) or non-volatile (non-transitory), removable or non-removable medium implemented in any method or technology for storage of information (such as computer-readable instructions, data structures, computer program modules or other data). The computer-readable storage medium includes, but is not limited to, a random access memory (RAM), a read-only memory (ROM), an electrically erasable programmable read-only memory (EEPROM), a flash memory or other memory technologies, a compact disc read-only memory (CD-ROM), a digital versatile disk (DVD) or other optical disk storage, magnetic cassette, magnetic tape, magnetic disk storage or other magnetic storage devices, or any other medium that can be used to store desired information and can be accessed by a computer.

The computer-readable storage medium is provided in Embodiment 7 and is used for storing a computer program. The computer program implements centralized information announcement. A mature information interaction mechanism is used and node information may be sent in a targeted manner, so as to avoid data bloating. Furthermore, the computer program implements the distributed routing decision-making, so as to reduce computational complexity of the routing decision-making and increase a convergence speed, thereby realizing scheduling of computing power nodes and the network nodes in the computing power network.

Embodiments 1 to 7 of the present disclosure provide a computing power network information announcement and routing decision-making method, an orchestration management and control system, an entry node, a computing power network, a computer device and a computer-readable storage medium. The orchestration management and control system of the computing power network obtains and stores information of each node in the computing power network in real time, formulates respective issuing information for each entry node in the computing power network based on the information of each node, and announces the respective issuing information to each entry node, so that each entry node with the routing decision-making capability makes routing decision for services accessing the computing power network through the services themselves. With the centralized information announcement and distributed routing decision-making, a mature information interaction mechanism may be used to achieve information announcement, and node information may be sent to each entry node in a targeted manner, so as to avoid data bloating. In addition, each entry node with the routing decision-making capability making routing decision for its own services may reduce computational complexity of routing decision-making, increase a convergence speed, and can be adapted to the needs of synchronous scheduling of a computing power node and a network node in the computing power network.

It can be understood that the above embodiments are merely exemplary embodiments adopted for illustrating principles of the present disclosure, but the present disclosure is not limited thereto. Those of ordinary skill in the art may make various changes or improvements without departing from spirit and essence of the present disclosure, and these changes or improvements are also regarded as being within the protection scope of the present disclosure.

## Claims

1. A computing power network information announcement and routing decision-making method, **characterized by** being applied to an orchestration management and control system of a computing power network, and the method comprising:

   obtaining and storing information of each node in the computing power network in real time;
   formulating respective issuing information for each entry node in the computing power network based on the information of each node; and
   announcing the respective issuing information to each entry node to make each entry node receive the issuing information announced to the entry node itself, and make routing decision for services accessing the computing power network through the services themselves based on the received issuing information.

2. The method according to claim 1, **characterized in that** making routing decision for the services accessing the computing power network through the services themselves based on the received issuing information is specifically to make routing decision, by first entry nodes with routing decision-making capabilities in all entry nodes, for the services accessing the computing power network through the services themselves based on the received issuing information.

3. The method according to claim 2, **characterized in that** the information of each node specifically includes information of each computing power node, wherein
   information of a computing power node includes location information of the computing power node and resource information of the computing power node.

4. The method according to claim 3, **characterized in that** the information of each node specifically further includes information of each network node and information of each entry node, wherein

   information of a network node includes location information of the network node, connection information of the network node and performance information of the network node; and
   information of an entry node includes location information of the entry node and access service information.

5. The method according to claim 4, **characterized in that** obtaining and storing the information of each node in the computing power network in real time, specifically includes:

   receiving self-change information reported in real time by each computing power node, each network node and each entry node in the computing power network after their own information changes, or querying respective information from each computing power node, each network node and each entry node in the computing power network in real time according to a preset frequency; and
   storing the received or queried information of each computing power node in a computing power node information database, the received or queried information of each network node in a network node information database, and the received or queried information of each entry node in an entry node information database.

6. The method according to any one of claims 2 to 5, **characterized in that** formulating respective issuing information for each entry node in the computing power network based on the information of each node, specifically includes:

   determining whether each entry node has a routing decision-making capability;
   if a first entry node has the routing decision-making capability, aggregating the information of each node for the first entry node, wherein the first entry node is an entry node with the routing decision-making capability; and
   further determining whether a change amplitude of each parameter in the aggregated information of each node exceeds a preset threshold; if the change amplitude exceeds the preset threshold, using a current value of a parameter with a change amplitude exceeding the preset threshold as the issuing information for the first entry node.

7. The method according to claim 6, **characterized in that** aggregating the information of each node for the first entry node, specifically includes:

   dividing all nodes in the computing power network into first type of nodes that meet a preset association condition with the first entry node and second type of nodes that do not meet the preset association condition with the first entry node based on the information of each node; and
   for the first entry node, aggregating node information of the first type of nodes according to a first granularity, and aggregating node information of the second type of nodes according to a second granularity, the second granularity being greater than the first granularity.

8. The method according to claim 7, **characterized in**

**that** dividing all the nodes in the computing power network into the first type of nodes that meet the preset association condition with the first entry node and the second type of nodes that do not meet the preset association condition with the first entry node based on the information of each node, specifically includes:

> based on location information in the information of each node, dividing some nodes, within a preset proximity range of the first entry node, in the computing power network as the first type of nodes associated with the first entry node;
> based on access service information in information of the first entry node, dividing some nodes, having service association with the first entry node, in the computing power network as the first type of nodes associated with the first entry node; and
> dividing remaining nodes in the computing power network as the second type of nodes associated with the first entry node.

9. The method according to claim 7, **characterized in that** for the first entry node, aggregating the node information of the first type of nodes according to the first granularity, and aggregating the node information of the second type of nodes according to the second granularity, the second granularity being greater than the first granularity, specifically includes:

> for the first entry node, aggregating the node information of the first type of nodes according to a first preset time interval and a first preset location area; and
> for the first entry node, aggregating the node information of the second type of nodes according to a second preset time interval and a second preset location area;
> wherein the second preset time interval is greater than the first preset time interval, and the second preset location area is greater than the first preset location area.

10. The method according to claim 6, **characterized in that** determining whether the change amplitude of each parameter in the aggregated information of each node exceeds the preset threshold; if the change amplitude exceeds the preset threshold, using the current value of the parameter with the change amplitude exceeding the preset threshold as the issuing information for the first entry node, specifically includes:

> in response to nodes in the computing power network being computing power nodes, determining whether a change amplitude of a resource information parameter of each computing power node in aggregated information of each computing power node exceeds a first preset threshold; and if the change amplitude exceeds the first preset threshold, using a current value of a resource information parameter of a computing power node with a change amplitude exceeding the first preset threshold as the issuing information of the first entry node; and
> in response to nodes in the computing power network being network nodes, determining each network link, from the first entry node to a certain computing power node and connected by connection information of the network node, in aggregated information of each network node, and determining whether a change amplitude of a performance information parameter of a network node of each network link exceeds a second preset threshold; and if the change amplitude exceeds the second preset threshold, using a current value of a performance information parameter of a network node with a change amplitude exceeding the second preset threshold as the issuing information of the first entry node.

11. The method according to claim 10, **characterized in that** the change amplitude of the performance information parameter of the network node of each network link is specifically calculated according to a following formula:

$$S^2 = 1/n \sum_{i=1}^{n} (Zi - \mu)^2$$

in the formula, $S^2$ is a change amplitude of a performance information parameter of a certain network node of a certain network link, n is a number of network nodes of the certain network link, Zi is equal to an absolute value of a difference between Xi and Yi (Zi=|Xi-Yi|) and is a deviation between a current value Xi of a performance information parameter of a certain network node of an i-th (i∈(1,n)) network node and a historical value Yi thereof in a previous aggregation, and $\mu$ is an expected value of the performance information parameter of the certain network node.

12. The method according to any one of claims 2 to 11, **characterized in that** the issuing information for the first entry nodes specifically includes information of computing power nodes for the first entry nodes and information of network nodes for the first entry nodes; and announcing the respective issuing information to each entry node to make each entry node receive the issuing information announced to the entry node itself, and make the first entry nodes with the routing decision-making capabilities in all the entry nodes make routing decision for the services accessing the computing power network through the services themselves based on the received issuing information, specifically includes:

announcing a respective issuing information to each first entry node to make each first entry node receive the issuing information announced to the first entry node itself, and after the services accessing the computing power network through the services themselves are sorted according to a service category and/or user priority, sequentially selecting, based on information of a computing power node and information of a network node in the received issuing information, a computing power node for each service sorted, and selecting a network link, composed of network nodes, reaching the selected computing power node.

13. The method according to claim 6, **characterized in that** after determining whether each entry node has the routing decision-making capability, the method further comprises:

if a second entry node does not have the routing decision-making capability, formulating a routing decision scheme for an access service of the second entry node based on the information of each node, and using the formulated routing decision scheme as the issuing information for the second entry node, wherein the second entry node is an entry node without the routing decision-making capability.

14. A computing power network information announcement and routing decision-making method, **characterized by** being applied to an entry node of a computing power network, and the method comprising:

receiving issuing information announced by an orchestration management and control system of the computing power network, wherein the issuing information is formulated and announced respectively, by the orchestration management and control system, for each entry node in the computing power network based on the information of each node after obtaining and storing information of each node in the computing power network in real time; and making routing decision for services accessing the computing power network through the services themselves based on the received issuing information.

15. The method according to claim 14, **characterized in that** the entry node is specifically a first entry node with a routing decision-making capability.

16. The method according to claim 15, **characterized in that** making routing decision for the services accessing the computing power network through the services themselves based on the received issuing information, specifically includes:

sorting the services accessing the computing power network through the services themselves according to a service category and/or user priority; and making routing decision sequentially for each sorted service based on the received issuing information.

17. The method according to claim 16, **characterized in that** sorting the services accessing the computing power network through the services themselves according to a service category and/or user priority, specifically includes:

for a certain service accessing the computing power network through the service itself, prioritizing on a basis of the certain service being a delay-sensitive service, and/or a user of the certain service subscribing to a priority service.

18. The method according to claim 16, **characterized in that** issuing information for the first entry node specifically includes information of a computing power node for the first entry node and information of a network node for the first entry node; and making routing decision sequentially for each sorted service based on the received issuing information, specifically includes:

sequentially selecting, based on the information of the computing power node and the information of the network node in the received issuing information, a computing power node for each service sorted, and selecting a network link, composed of network nodes, reaching the selected computing power node.

19. The method according to claim 18, **characterized in that** the information of the computing power node included in the issuing information is specifically a current value, determined by the orchestration management and control system after aggregating the information of each node for the first entry node, of a resource information parameter of a computing power node with a change amplitude exceeding a first preset threshold; and the information of the network node included in the issuing information is specifically a current value, determined by the orchestration management and control system after aggregating the information of each node for the first entry node, of a performance information parameter of a network node with a change amplitude exceeding a second preset threshold.

20. An orchestration management and control system of a computing power network, **characterized by** comprising:

a resource collection module configured to obtain and store information of each node in the computing power network in real time;
a resource management module connected to the resource collection module and configured to formulate respective issuing information for each entry node in the computing power network based on the information of each node; and
a resource configuration module connected to the resource management module and configured to announce the respective issuing information to each entry node to make each entry node receive the issuing information announced to the entry node itself, and make routing decision for services accessing the computing power network through the services themselves based on the received issuing information.

21. An entry node of a computing power network, **characterized by** comprising:

a resource receiving module configured to receive issuing information announced by an orchestration management and control system of the computing power network, wherein the issuing information is formulated and announced respectively, by the orchestration management and control system, for each entry node in the computing power network based on the information of each node after obtaining and recording information of each node in the computing power network in real time; and
a service scheduling module connected to the resource receiving module and configured to make routing decision for services accessing the computing power network through the services themselves based on the received issuing information.

22. A computing power network, **characterized by** comprising an orchestration management and control system and various nodes, wherein the nodes include entry nodes, and the entry nodes include a first entry node with a routing decision-making capability; the orchestration management and control system is configured to implement the computing power network information announcement and routing decision-making method according to any one of claims 1 to 13, and the first entry node is configured to implement the computing power network information announcement and routing decision-making method according to any one of claims 14 to 19.

23. A computer device, **characterized by** comprising a memory and a processor, wherein the memory has stored a computer program thereon, and when the processor runs the computer program stored in the memory, the processor performs the computing power network information announcement and routing decision-making method according to any one of claims 1 to 13 or claims 14 to 19.

24. A computer-readable storage medium, **characterized by** having stored a computer program thereon, when executed by a processor, the computer program implements the computing power network information announcement and routing decision-making method according to any one of claims 1 to 13 or claims 14 to 19.

Acquire and store information of nodes in a computing power network in real time ...... S11

Formulate respective issuing information for each ingress node in the computing power network according to the information of the nodes ...... S12

Announce the respective issuing information of each ingress node to each ingress node, so that the ingress node receives the issuing information announced to the ingress node, and according to the received issuing information, carries out routing decision-making for a service accessing the computing power network via the ingress node ...... S13

FIG. 1

FIG. 2

Receiving issuing information announced by an orchestration management and control system of the computing power network, where the issuing information is formulated and announced respectively, by the orchestration management and control system, for each entry node in the computing power network based on the information of each node after obtaining and storing information of each node in the computing power network in real time ...... S21

Making routing decision for services accessing the computing power network through the services themselves based on the received issuing information ...... S22

FIG. 3

Resource collection module — 11

Resource management module — 12

Resource configuration module — 13

FIG. 4

Resource receiving module — 21

Service scheduling module — 22

FIG. 5

Memory — 10

Processor — 20

FIG. 6

## INTERNATIONAL SEARCH REPORT

| International application No. |
|---|
| **PCT/CN2023/111888** |

**A.    CLASSIFICATION OF SUBJECT MATTER**

H04L 45/00(2022.01)i

According to International Patent Classification (IPC) or to both national classification and IPC

**B.    FIELDS SEARCHED**

Minimum documentation searched (classification system followed by classification symbols)

IPC: H04L, G06F

Documentation searched other than minimum documentation to the extent that such documents are included in the fields searched

Electronic data base consulted during the international search (name of data base and, where practicable, search terms used)

CJFD, CNTXT, ENTXT, ENTXTC, DWPI: 算力, 网络, 路由, 决策, 节点, 通告, 感知, 通知, computing, network, notify, announcement, decision, routing, node

**C.    DOCUMENTS CONSIDERED TO BE RELEVANT**

| Category* | Citation of document, with indication, where appropriate, of the relevant passages | Relevant to claim No. |
|---|---|---|
| X | CN 112153153 A (PEKING UNIVERSITY SHENZHEN GRADUATE SCHOOL) 29 December 2020 (2020-12-29) descriptions 32-46 and 68-96, and figures 1 and 6 | 1-5, 12, 14-18, 20-24 |
| PX | CN 115473842 A (CHINA UNITED NETWORK COMMUNICATIONS GROUP CO., LTD.) 13 December 2022 (2022-12-13) description, paragraphs 74-182, and figures 1-6 | 1-24 |
| A | CN 114615180 A (ALIBABA DAMOYUAN (HANGZHOU) TECHNOLOGY CO., LTD.) 10 June 2022 (2022-06-10) entire document | 1-24 |
| A | CN 114710200 A (COMPUTER NETWORK INFORMATION CENTER, CHINESE ACADEMY OF SCIENCES) 05 July 2022 (2022-07-05) entire document | 1-24 |
| A | WO 2021208914 A1 (SPREADTRUM SEMICONDUCTOR (NANJING) CO., LTD.) 21 October 2021 (2021-10-21) entire document | 1-24 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 September 2023** | **02 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/111888**

| Patent document cited in search report | | | Publication date (day/month/year) | Patent family member(s) | | | Publication date (day/month/year) |
|---|---|---|---|---|---|---|---|
| CN | 112153153 | A | 29 December 2020 | None | | | |
| CN | 115473842 | A | 13 December 2022 | None | | | |
| CN | 114615180 | A | 10 June 2022 | None | | | |
| CN | 114710200 | A | 05 July 2022 | None | | | |
| WO | 2021208914 | A1 | 21 October 2021 | CN | 113535343 | A | 22 October 2021 |

Form PCT/ISA/210 (patent family annex) (July 2022)

**EP 4 589 910 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211109753